# EUROPÄISCHE PATENTSCHRIFT

(11) **EP 3 274 161 B1**
(45) Veröffentlichungstag und Bekanntmachung des Hinweises auf die Patenterteilung: **15.05.2019**
(21) Anmeldenummer: 16719777.1
(22) Anmeldetag: 22.03.2016
(51) Int. Cl.: B29D 99/00, B29C 70/46, B29C 70/20

(54) **VERFAHREN ZUR HERSTELLUNG FASERVERSTÄRKTER FORMKÖRPER, DANACH HERGESTELLTE FASERVERSTÄRKTE FORMKÖRPER UND DEREN VERWENDUNG**
METHOD FOR PRODUCING FIBRE-REINFORCED MOULDED BODIES, FIBRE-REINFORCED MOULDED BODIES PRODUCED ACCORDING TO SAID METHOD AND USE OF SAME
PROCÉDÉ POUR PRODUIRE DES CORPS MOULÉS RENFORCÉS PAR DES FIBRES, CORPS MOULÉS RENFORCÉS PAR DES FIBRES PRODUITS SELON CE PROCÉDÉ ET LEUR UTILISATION

(30) Priorität: 23.03.2015 DE 102015104302
(43) Veröffentlichungstag der Anmeldung: 31.01.2018
(73) Patentinhaber: Deutsche Institute für Textil- und Faserforschung Denkendorf, 73770 Denkendorf (DE)
(72) Erfinder: HERMANUTZ, Frank, 71229 Leonberg (DE)
(74) Vertreter: Held, Stephan
(86) Internationale Anmeldenummer: PCT/EP2016/056230
(87) Internationale Veröffentlichungsnummer: WO 2016/150945

(56) Entgegenhaltungen:
- WO-A1-03/027373

## Beschreibung

Die Erfindung betrifft ein Verfahren zur Herstellung faserverstärkter Formkörper mit einer organischen Matrix auf Basis thermoplastischer Celluloseester, die danach erhältlichen faserverstärkten Formkörper sowie deren Verwendung, insbesondere als Automobilinnenteil sowie zur Herstellung eines carbonisierten Formkörpers.

Faserverstärkte Kunststoffe sind aufgrund ihrer geringen Dichte, gekoppelt mit hoher spezifischer Festigkeit und Steifigkeit, attraktive Konstruktionswerkstoffe, die sich vor allem im Fahrzeug- und Flugzeugbau mehr und mehr durchsetzen. Faserverbundwerkstoffe sind eine Werkstoffalternative zu Metallen, die sich durch ihr geringes Gewicht auszeichnen (sh. Neitzel, M.; Breuer, U., "Die Verarbeitungstechnik der Faser-Kunststoff-Verbunde", Carl Hanser Verlag München, Wien (1997), 1; Berthelot, J.-M., "Composite materials. Mechanical behaviour and structural analysis", Springer-Verlag, New York, 1999, S. 3-15; Michaeli, W.; Wegener, M., "Einführung in die Technologie der Faserverbundwerkstoffe", Carl Hanser Verlag, München, Wien, 1990, S. 53-69).

Konventionelle, duroplastische Faserverbundwerkstoffe sind in der Regel nicht oder nur mit großem Aufwand recyclingfähig und werden folglich vorwiegend thermisch verwertet (Janda, R., "Kunststoffverbundsysteme. Grundlagen, Anwendung, Verarbeitung, Prüfung", VCH Weinheim, 1990, Kapitel 6.1-6.2.). Speziell im Fahrzeugbau, aber auch bei anderen Anwendungen wird zunehmend die Forderung nach vollständigem Recycling gestellt bzw. es besteht eine Rücknahmeverordnung. Deshalb werden neue Verbundsysteme gesucht, die diese Forderungen eines ökonomischen Recyclings erfüllen können. Hier sind thermoplastische Materialien besonders vorteilhaft, da sie im Unterschied zu Duroplasten wiederverwendet werden können (Eckell, A., "Die Chemie und Physik von Verbundwerkstoffen mit Polymermatrix", in "Verbundwerkstoffe und Werkstoffverbunde in der Kunststofftechnik", Herausgeber: Verein Deutscher Ingenieure, VDI-Gesellschaft Kunststofftechnik; VDI-Verlag GmbH, Düsseldorf (1982), S. 27-53). Eingesetzt werden als thermoplastische Matrixmaterialien, sofern keine besonderen Anforderungen vorliegen, Polyolefine und bei mechanisch beanspruchten Teilen PA6, PA6.6, thermoplastische Polyester sowie PEEK.

Thermoplastische Celluloseester würden im Vergleich zu diesen Matrixpolymeren eine echte Alternative darstellen, weil sie neben ihren hochwertigen Eigenschaften auf nachwachsenden Rohstoffen basieren und somit zusätzlich ökologische Vorteile böten. Thermoplastische Celluloseester haben als Formmassen auf Basis abgewandelter Naturprodukte aufgrund ihres breiten Eigenschaftsspektrums schon eine großtechnische Bedeutung erlangt. In der Technik werden Celluloseacetate CA, Cellulosepropionate CP sowie Celluloseacetobutyrat CAB- und Celluloseacetopropionat CAP-Mischester eingesetzt (sh. Müller, F.; Leuschke, C., in: Kunststoff Handbuch, Band 3/1, S. 396-457, Carl Hanser Verlag, München, Wien, 1993; Eicher, T.; Fischer, W., in: Ullmanns Enzyklopädie der technischen Chemie, 4. Aufl., Band 9, S. 227-246, Verlag Chemie, Weinheim, 1975). Aus diesen Celluloseesterformmassen können vielfältige Produkte mit unterschiedlichen Eigenschaften hergestellt werden. Typische Anwendungen reichen von Werkzeuggriffen, Brillenfassungen bis hin zu CAB/Al-Verbundprofilen für Zierleisten. Hier spiegeln sich die hochwertigen, günstigen Eigenschaften wie beispielsweise Transparenz, Zähigkeit, Witterungsbeständigkeit und Spannungsrissunempfindlichkeit wieder. Aufgrund dieser Eigenschaften wären thermoplastische Celluloseester gut geeignet, um als Matrixpolymere in Verbundwerkstoffen eingesetzt zu werden.

In vorangegangenen Arbeiten (sh. Horvath, M., "Faserverbundwerkstoffe mit thermoplastischer Matrix auf Basis nachwachsender Rohstoffe", Dissertation, Universität Stuttgart, 2000; Hermanutz, H.; Oppermann, W., Abschlussbericht Forschungsvorhaben Nr. 10982) ist es gelungen, durch Einsatz von technischen Viskoseregeneratfasern (Reifencord) und Lyocellfasern als Verstärkungsfasern neue Verbundsysteme mit Celluloseestern als Matrixpolymere zu entwickeln. Diese Verbundstoffe zeigten ausgezeichnete mechanische Eigenschaften, die im Bereich glasfaserverstärkter Thermoplaste lagen, zurückzuführen auf eine hohe Faser-Matrix-Haftung der gewählten Komponenten. Nachteile traten bei diesen Entwicklungsarbeiten allerdings bei der Verbundherstellung auf: Aufgrund der hohen Viskosität der Schmelzen der Cellulosederivate mussten lange Presszeiten von bis zu 60 min angewandt werden, was technisch von Nachteil ist und die Produktivität des Verfahrens einschränkt. Dies hat letztendlich die technische Umsetzung dieser interessanten neuen Verbundwerkstoffklasse verhindert.

Erwähnenswert ist hier der Stand der Technik nach der US 3271231 A sowie US 2003/0124937 A1 (entspricht WO 03/027373 A1). In der US 3271231 A wird ein faserverstärkter Formkörper auf Basis von Celluloseacetatfasern und Cellulosefasern beschrieben. Die Celluloseacetatfasern von 5,5 bis 35 Denier sollen eine Länge von ½ bis 2 Inch, die Cellulosefasern von 40 bis 60 Denier eine Länge von ½ bis 3 Inch und weitere cellulosische Fasern, wie Hanf, eine Länge von ½ bis 3 Inch aufweisen. Es handelt sich hier um klassische Stapel- bzw. Kurzfasern. Entsprechendes gilt für den Stand der Technik nach der US 2003/0124937 A1. Die zur Herstellung eines faserverstärkten Formkörpers herangezogenen natürlichen Cellulosefasern sollen eine Länge von 0,01 bis 10,2 cm aufweisen. Von den gleichfalls herangezogenen Celluloseacetat-Fasern wird die gleiche Länge gefordert. Es handelt sich auch hier um Stapel- bzw. Kurzfasern, was in der Patentschrift mit der Formulierung *"stable cut fiber-length"* zum Ausdruck gelangt. Ein entsprechender Sachverhalt geht aus den Beispielen dieser Patentschrift hervor.

Der Erfindung lag daher die Aufgabe zugrunde, die oben angesprochenen Nachteile des Standes der Technik zu beheben. Insbesondere sollte das eingangs bezeichnete Verfahren zur Herstellung faserverstärkter Formkörper mit einer organischen Matrix auf Basis thermoplastischer Celluloseester so weiterentwickelt werden, dass eine wesentliche Vereinfachung der Verbundherstellung möglich wird. Die Verbundwerkstoffe sollen verbesserte Eigenschaften zeigen, dies insbesondere im Hinblick auf Verbesserungen des E-Moduls, der Zugfestigkeit, des Biegemoduls und der Kerbschlagzähigkeit. Zudem sollen sich bei der Durchführung dieses Verfahrens technisch akzeptable Presszeiten ergeben. Der Einsatz von Carbonfasern als alternative Verstärkungsfaser sollte ebenfalls in technisch einfacher Art und Weise ermöglicht werden.

Erfindungsgemäß wird diese Aufgabe gelöst durch ein Verfahren zur Herstellung faserverstärkter Formkörper mit einer organischen Matrix auf Basis thermoplastischer Celluloseester, das dadurch gekennzeichnet ist, dass Verstärkungsfasern in Form von Endlosfasern mit Schmelzfasern in Form von Endlosfasern auf Basis thermoplastischer Celluloseester in ein textiles Flächengebilde überführt werden, wobei der thermoplastische Celluloseester der Schmelzfasern einen Schmelzflussindex MFI nach DIN ISO 1133 von 1,0 bis 50 g/min bei 245°C und die Schmelzfasern einen Einzelfilamenttiter nach DIN 53812 von 0,3 bis 40,0 dtex, eine Zugfestigkeit in trockenem Zustand nach DIN 53816 von 2 bis 40 cN/tex sowie eine Bruchdehnung in trockenem Zustand nach DIN 53816 von 2 bis 40% aufweisen, und das erhaltene textile Flächengebilde zum Aufschmelzen der Schmelzfasern unter Bildung eines faserverstärkten Formkörpers erhitzt wird.

Im Rahmen der Erfindung lassen sich insbesondere Verstärkungsfasern in Form von Chemiefasern und/oder Naturfasern einsetzen. Hierbei gilt es als bevorzugt, dass die Naturfasern Samenfasern, insbesondere von Baumwolle, Bastfasern, insbesondere von Flachs, Hanf, Jute, Kinap, Ramie, Abaca, Rosenna und/oder Urena, Hartfasern, insbesondere von Alpha- oder Espatogras, Fique, Henequen, Kokos, Manila, Porphium und/oder Glisal, Tierfasern, insbesondere von Wolle bzw. feine und grobe Tierhaare, Holzfasern, Blattfasern und/oder Seide darstellen. Des Weiteren wird es bevorzugt, dass die Chemiefasern, insbesondere auf Basis abgewandelter Naturstoffe pflanzlicher Herkunft, insbesondere Kupferseidefasern, Viskosefasern (Viskosereifencord), Modalfasern, Kunstseide- und Celluloseacetatfasern, insbesondere als Acetat oder Triacetat, Alginatfasern, Polyisoprenfasern oder Synthesefasern, insbesondere Elastofasern, Fluorofasern, Polyacrylfasern, insbesondere auf Basis von Polyacrylonitril oder Modacryl, Polyamidfasern, insbesondere Nylon- oder Aramidfasern, Polychloridfasern, insbesondere auf Basis von Polyvinylchlorid und Polyvinylidenchlorid, Polyesterfasern, Polyolefinfasern, insbesondere auf Basis von Polyethylen und Polypropylen, oder Polyvinylalkoholfasern darstellen. Dabei ist es zweckmäßig, anorganische Chemiefasern auf Basis von Glasfasern, Carbonfasern oder Metallfasern einzusetzen.

Die erfindungsgemäß herangezogenen Schmelzfasern auf Basis thermoplastischer Celluloseester sind insbesondere solche, bei denen der thermoplastische Celluloseester in Form von Celluloseacetat CA, Celluloseproprionat CP, Cellulosebutyrat CB, Celluloseacetopropionat CAP und/oder Celluloseacetobutyrat CAB vorliegt. Somit werden entsprechende Matrixpolymere vor der Verbundherstellung zu schmelzbaren Fasern verarbeitet, die erfindungsgemäß herangezogen werden. Durch diese Vorgehensweise wird das erarbeitete technisch umsetzbare Verfahren zur Herstellung der erfindungsgemäß erhaltenen neuen Faserverbundsysteme auf Basis von Cellulosematerial eröffnet und zudem die Anwendung moderner Verbundherstellungstechnologien (Comingling, Coweaving, Coknitting) ermöglicht.

Ferner ist es von Vorteil, wenn die thermoplastischen Celluloseester auf die definierten Eigenschaften durch Einbezug eines Weichmachers eingestellt werden, insbesondere in einer Menge von 1 bis 20 Gew.-%. Bei den Weichmachern unterliegt die Erfindung keinen relevanten Einschränkungen. Zweckmäßige Weichmacher für die erfindungsgemäß besonders in Betracht kommenden Celluloseester können zum Beispiel schwerflüchtige Ester, wie Dioctylphthalat, C₁₀-C₂₁ Hexansulfonsäurephenylester (Hexamoll), 1,2-Cyclohexandicarbonsäurediisononylester (Mesamoll), fette Öle, Weichharze oder auch Campher sein. Der Weichmacher verschiebt den thermoelastischen Bereich hin zu niedrigeren Temperaturen, so dass der Kunststoff im Bereich der Einsatz-Temperatur die gewünschten "elastischeren" Eigenschaften aufweist.

Im Hinblick auf die der Erfindung zugrundeliegende Aufgabe ist es darüber hinaus vorteilhaft, dass der thermoplastische Celluloseester eine Härte H30 nach DIN 53505 von 5 bis 300, insbesondere von 10 bis 150, und/oder eine Nullviskosität η in Pas nach DIN 54811 von 5 bis 1000, insbesondere von 20 bis 200, aufweist.

Die Eigenschaften des thermoplastischen Celluloseesters wirken sich auf den Titer der erfindungsgemäß herangezogenen Schmelzfasern aus. Hierbei gilt es als besonders vorteilhaft, wenn die Schmelzfasern einen Einzelfilamenttiter nach DIN 53812 von 0,5 bis 30 dtex, insbesondere von 0,7 bis 6 dtex, eine Zugfestigkeit in trockenem Zustand nach DIN 53816 von 3 bis 30 cN/tex, insbesondere von 10 bis 25 cN/tex sowie eine Bruchdehnung in trockenem Zustand nach DIN 53816 von 3 bis 35%, insbesondere von 6 bis 25%, aufweisen.

Demzufolge haben die oben bezeichneten Eigenschaften der erfindungsgemäß herangezogenen Schmelzfasern einen merklichen Einfluss auf die besonderen Eigenschaftswerte des Verfahrenserzeugnisses. Dies gilt gleichermaßen für die Eigenschaften der Verstärkungsfasern. Hierbei hat es sich gezeigt, dass die Verstärkungsfasern zweckmäßigerweise folgende Eigenschaften aufweisen: einen Einzelfilamenttiter nach DIN 53812 von 0,2 bis 6 dtex, insbesondere von 0,5 bis 4 dtex, eine Zugfestigkeit in trockenem Zustand nach DIN 53816 von 40 bis 500 cN/tex, insbesondere von 70 bis 300 cN/tex, und/oder eine Bruchdehnung in trockenem Zustand nach DIN 53816 von 1 bis 20%, insbesondere von 1,5 bis 14%.

Erfindungsrelevant ist es, dass die Verstärkungsfasern wie auch die Schmelzfasern in Form von Endlosfasern vorliegen, demzufolge nicht in Form üblicher Kurz- oder Stapelfasern, die den erfindungsgemäß angestrebten Erfolg nicht erreichen lassen. Bevorzugt ist es, wenn die Endlosfasern in Form von Garnen eingesetzt werden. Auch kommt der Einsatz von Endlosfasern in Form von insbesondere gezwirnten Garnen in Betracht. Wichtig ist es, dass die Verstärkungs- und Schmelzfasern, wie auch immer sie zueinander angeordnet sein mögen, als Endlosfasern vorliegen. Die Garne können für die Herstellung der Hybrid-Textilien durch Aufbringen einer Faserpräparation (z.B. Spulöle) in technisch bewährter Weise vorbereitet werden. Hier gibt es keine Einschränkungen.

Erfindungsgemäß wird es insbesondere in Betracht gezogen, dass ein textiles Flächengebilde in Form von Geweben, Gewirken, Strickwaren, Geflechten oder Gelegen aus den Verstärkungs- und den Schmelzfasern hergestellt wird. Vorteilhaft ist es dabei, dass die Gewebe durch gemeinsames Verweben der Verstärkungsfasern und der Schmelzfasern hergestellt werden, insbesondere mit den Verstärkungsfasern als Schuss und den Schmelzfasern als Kette (Coweaving). Vorzugsweise werden zur Herstellung der textilen Flächengebilde Mischgarne aus Schmelzfasern und Verstärkungsfasern als Hybridgarn eingesetzt. So können auch vorteilhaft Hybridgestricke (Coknitting) hergestellt werden.

Das Mengenverhältnis von Verstärkungsfasern zu Schmelzfasern ist nicht kritisch. Es wird bevorzugt, dass die Verstärkungsfasern und die Schmelzfasern in einem derartigen Mengenverhältnis eingesetzt werden, dass der Anteil der Verstärkungsfasern in dem faserverstärkten Formkörper zwischen 5 und 75 Gew.-%, insbesondere zwischen 10 und 50 Gew.-% liegt.

Um das erfindungsgemäße Verfahrensziel wünschenswert zu erreichen, gilt es als bevorzugt, dass das Aufschmelzen der Schmelzfasern bei einer Temperatur von 80°C bis 300°C, insbesondere von 120°C bis 260°C durchgeführt wird. Zweckmäßig ist es, wenn das Aufschmelzen der Schmelzfasern unter einem Druck von 0,1 bis 1000 bar, insbesondere von 2 bis 100 bar, durchgeführt wird. Zweckmäßig ist es des Weiteren, wenn das Aufschmelzen der Schmelzfasern während einer Zeitdauer von 5 s bis 20 min, insbesondere von 30 s bis 5 min, durchgeführt wird.

Durch die oben beschriebenen Maßnahmen kann in vorteilhafter Weise ein flächenförmiger faserverstärkter Formkörper hergestellt werden, wobei insbesondere mehrere flächenförmige Formkörper zu einem Verbundkörper miteinander verpresst werden können.

Das oben beschriebene Verfahren gemäß der Erfindung, das die zugrunde gelegte Aufgabe in wünschenswertem Ausmaß löst, führt demzufolge zu vorteilhaften faserverstärkten Formkörpern.

Der faserverstärkte Formkörper gemäß der Erfindung ist dadurch gekennzeichnet, dass die organische Matrix auf einem thermoplastischen Celluloseester beruht, wobei 1.) der thermoplastische Celluloseester einen Schmelzflussindex MFI nach DIN ISO 1133 von 1,0 bis 50 g/min bei 245°C, und 2.) der faserverstärkte Formkörper ein Biegemodul nach DIN EN ISO 527 von 1.500 bis 20.000 MPa, insbesondere von 4.000 bis 15.000 MPa, ganz bevorzugt 6.000 bis 10.000 MPa, eine Zugfestigkeit nach DIN EN ISO 527 von 150 bis 600 MPa, insbesondere von 200 bis 400 MPa, ganz bevorzugt 250 bis 400 MPa, und/oder ein E-Modul nach DIN EN ISO 527 von 1.000 bis 15.000 MPa, insbesondere von 2.000 bis 12.000 MPa, ganz besonders bevorzugt 3.500 bis 10.000 MPa, aufweist.

Es hat sich gezeigt, dass sich der erfindungsgemäße faserverstärkte Formkörper gegenüber Vergleichsprodukten des Standes der Technik durch eine herausragende Kerbschlagfestigkeit auszeichnet. Die Kerbschlagzähigkeit ist ein Maß für die Widerstandsfähigkeit eines Werkstoffs gegen eine schlagartige (dynamische) Beanspruchung. Die Einheit ist die geleistete Kerbschlagarbeit, bezogen auf die Bruchfläche in Joule pro Flächeneinheit (J/cm² bzw. auch kJ/m²). Erfindungsgemäß werden vorteilhafte Werte von 100 bis 600 kJ/m² nach DIN EN ISO 179-1 (Charpy 23°C), insbesondere 200 bis 400 kJ/m², besonders bevorzugt 300 bis 400 kJ/ m², erreicht.

Die besondere Bedeutung der erfindungsgemäß erzielbaren vorteilhaften Kerbschlagzähigkeit ergibt sich aufgrund folgender Erwägungen: Das Verformungsvermögen eines Werkstoffs kann unter abweichenden Beanspruchungsbedingungen verschieden sein. Deshalb ist die Kenntnis über das Verformungsverhalten eines Werkstoffs ein wichtiges Kriterium für die Werkstoffbeurteilung bzw. Werkstoffauswahl. So hat es sich häufig gezeigt, dass vor allem KRZ-Werkstoffe, die bei der üblichen Festigkeitsprüfung im (statischen) Zugversuch die gestellten Anforderungen erfüllen, in der Praxis zum Beispiel bei mehrachsiger Beanspruchung und tieferen Temperaturen aufgrund eines Sprödbruchs versagen. Zähigkeit und Sprödigkeit sind nach Fachwissen also Eigenschaften, die nicht allein vom Werkstoff abhängen, sondern auch von den Beanspruchungsbedingungen, wie Spannungszustand, Verformungsgeschwindigkeit und Temperatur. Daher ist es wegen des Auftretens mehrachsiger und/oder schlagartiger Beanspruchung in der technischen Praxis stets sinnvoll, das Werkstoffverhalten auch unter Sprödbruchbedingungen zu untersuchen.

Im Rahmen der Verwirklichung der Erfindung hat es sich gezeigt, dass der faserverstärkte Formkörper vorzugsweise flächenförmig ist und zudem die besonders günstige Eigenschaft aufweist, dass der Formkörper durch thermisch-mechanische Behandlung, insbesondere durch Pressen, Biegen und Tiefziehen, in jede beliebige dreidimensionale Form gebracht werden kann.

Der erfindungsgemäße faserverstärkte Formkörper ist vielfältigen Verwendungen zugänglich, insbesondere als Konstruktionsteil im Fahrzeugbau, als Promenade, Lärmschutz, Geländer, Fenster und Türen, Fenster- und Türprofil, Fensterrahmen, Zaunsystem, Verpackungsmaterial, Kofferschale, Dämmmaterial und als Möbelteil. Bevorzugt ist es, dass der Formkörper als Automobilinnenteil, insbesondere als Dachteil, Seitenverkleidung, Türverkleidung, Kofferraumauskleidung, Reserveradmulde, Säulenverkleidung, Armaturenbrett, für den Automobil-Außenbereich sowie als Unterbodenschutz, verwendet wird.

Einen besonderen Vorteil stellt es dar, dass der erfindungsgemäße faserverstärkte Formkörper zur Herstellung eines carbonisierten Formkörpers, insbesondere durch Carbonisierung zwischen 400 und 3000°C, insbesondere zwischen 700 und 2400°C, eingesetzt werden kann. Hierbei ist es möglich, der Carbonisierung gegebenenfalls eine Graphitisierung anzuschließen.

Es hat sich demzufolge gezeigt, dass der Schlüssel des technischen Erfolgs, der mit der Erfindung erzielt wird, insbesondere das erfindungsgemäße Verfahren ist. Bei dessen Entwicklung waren folgende Erkenntnisse bedeutsam:
Um kürzere Presstaktzeiten zu realisieren, ist eine möglichst innige Vermischung der Verstärkungsfasern mit dem Matrixmaterial Vorbedingung. In Vorversuchen hat es sich erwiesen, dass dies über eine vorherige Verspinnung der Matrixpolymere zu Fasern (aus der Schmelze) und das Mischen mit den Verstärkungsfasern auf Faserebene erreicht werden kann. Die Konsolidierung zu Verbünden erfolgte in den Vorversuchen auf einer Heißpresse. Dieser Ansatz, der eine wesentliche Vereinfachung der Verbundherstellung und die Anwendung neuer Verbundtechnologien (Comingling, Coweaving) eröffnet, wird im Folgenden dargestellt. Systematisch untersucht wird dabei die thermoplastische Verarbeitung der Celluloseester zu geeigneten Fasern, die Herstellung der Fasermischungen aus Schmelzfasern und Verstärkungsfasern der beschriebenen Art, nämlich in Form von Endlosfasern, sowie die mechanischen Eigenschaften der Verbundwerkstoffe in Abhängigkeit von den Prozessparametern.

Zusammenfassend lassen sich die Vorteile, die mit der vorliegenden Erfindung in ihren verschiedenen Ausgestaltungen ersichtlich sind, wie folgt darstellen: hervorragende Faser-Matrix-Haftung aufgrund der Stoffgleichheit, gute Transparenz, gutes Ablösen des Verbundes aus dem Werkzeug, gute Recyclierbarkeit, 1. z.B. Auflösen der Matrix in Aceton, Abtrennen der Verstärkungsfasern und Rückgewinnung der in Aceton gelösten Matrix durch Abdestillieren des Aceton. 2. Granulieren der Verbundwerkstückes und Neuherstellung von kurzfaserverstärkten Verbundteilen durch Injektionsmoulding, 3. vorteilhaftes thermisches Umformen durch Tiefziehen der Verbundmaterialien sowie hohe Schlagzähigkeit des Materials. Darüber hinaus zeichnet sich der erfindungsgemäße faserverstärkte Formkörper durch sehr vorteilhafte Werte des E-Moduls, der Zugfestigkeit, des Biegemoduls und insbesondere der Kerbschlagzähigkeit aus.

Die Erfindung wird nachfolgend anhand von Beispielen, die auch Vorversuche betreffen, noch näher erläutert.

### Beispiel 1 (Schmelzspinnen der thermoplastischen Celluloseesterformmassen)

Für die Untersuchungen wurden die Celluloseesterformmassen eingesetzt, die sich in den vorstehend bezeichneten Arbeiten bewährt haben.

Die Eigenschaften der Formmassen wurden im Falle des CP und des CAB abgeglichen, um die Ergebnisse direkt vergleichen zu können. Beim CA konnte aufgrund der hohen Ausgangshärte des Materials nur eine harte Einstellung gewählt werden. In Tabelle 1 sind die eingesetzten Weichmacherkonzentrationen und die Eigenschaften der ausgewählten Celluloseesterformmassen zusammengefasst:

**Tabelle 1 (Eigenschaften der Celluloseestermatrices)**

| | CA | CP | | CAB | |
|---|---|---|---|---|---|
| DS (Substitutionsgrad) | 2,5 | 0,3 CA + 2,3 CP | | 1,0 CA + 1,6 CB | |
| Weichmacher % | 22 | 8 | 17 | 8 | 13 |
| Härte (H30) nach DIN 53505 | 100 | 70 | 55 | 65 | 44 |
| MFI (g/min) 245°C nach DIN ISO 1133 | 2,1 | 4,5 | 17 | 4,1 | 15 |
| η₀ Pas; T °C nach DIN 54811 (Nullviskosität) | 45; 265°C | 50, 250°C | 48, 225°C | 45, 255°C | 42, 230°C |

Entscheidend für den Einsatz der thermoplastischen Formmassen als Matrices für Verbundwerkstoffe ist deren thermische Stabilität im Temperaturintervall der Verbundherstellung. Zur Untersuchung wurden TGA-Untersuchungen durchgeführt. Es zeigte sich, dass sich ein Weichmacher in Form von Phthalsäureesterderivaten im Verarbeitungsbereich von 150 bis 210°C nicht verflüchtigt und die thermische Stabilität der ausgewählten Formmassen gegeben ist.

Die rheologischen Eigenschaften der Celluloseesterschmelzen wurden mit Hilfe eines Schmelzerheometers untersucht. Es wurde das viskoelastische Verhalten der Polymerschmelzen charakterisiert und die Grenzviskosität (η₀) bei einer definierten Temperatur gemessen. Die Werte für η₀ sind ebenfalls in Tabelle 1 mit der korrespondierenden Temperatur aufgeführt. Über η₀ konnte das Verarbeitungsverhaltens bei der Extrusion (Schmelzspinnen) zur Herstellung der Schmelzfasern abgeschätzt und die Spinntemperatur festgelegt werden.

Da bezüglich des Schmelzspinnens der thermoplastischen Formmassen keine Erfahrungswerte vorlagen, mussten zunächst die Grundparameter der Spinnversuche erarbeitet werden. Die Optimierung dieser Schmelzspinnversuche hatte das Ziel, Faserqualitäten herzustellen, die ein Coweaving und ein Coknitting mit Verstärkungsfasern ermöglichen. Angestrebt wurden Garne mit einem Gesamtgarntiter von etwa 200 dtex und einem Einzelfilamenttiter von maximal 6 dtex. Nach Festlegung der Verarbeitungsparameter wurden ausschließlich die genannten Faserfeinheiten hergestellt. Die erzielten Fasereigenschaften sind in den Tabellen 2 und 3 dargestellt.

**Tabelle 2 (Fasereigenschaften der CA-Schmelzfasern)**

| Laufende Nr. | CA1 | CA2 | CA3 |
|---|---|---|---|
| Spinngeschw. m/min | 250 | 500 | 1000 |
| Filamente | 32 | 32 | 32 |
| Titer dtex (Gesamtgarntiter) nach DIN 53812 | 210 | 200 | 185 |
| Zugfestigkeit in trockenem Zustand cN/tex nach DIN 53816 | 4,9 | 5,2 | 5,4 |
| Bruchdehnung in trockenem Zustand in % nach DIN 53816 | 23 | 21 | 19,5 |
| E-Modul in trockenem Zustand cN/tex nach DIN 53816 | 195 | 225 | 240 |

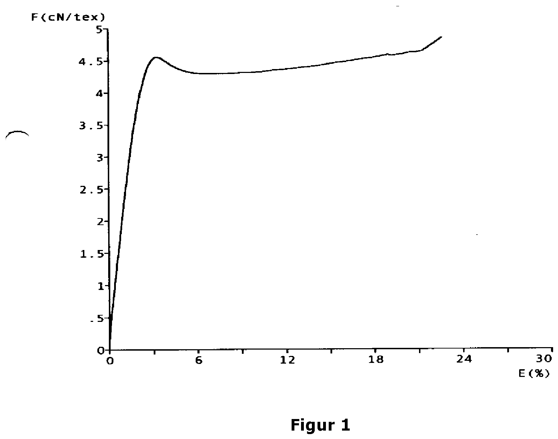

Von der Faser CA1 findet sich nachfolgend die Figur 1, die ein mittleres Kraft-Dehnungsdiagramm betrifft.

**Tabelle 3 (Fasereigenschaften CP-Schmelzfasern)**

| Laufende Nr. | CP1 | CP2 | CP3 | CP4 |
|---|---|---|---|---|
| Polymereinstellung | hart | hart | hart | weich |
| Spinngeschw. m/min | 250 | 500 | 1000 | 1000 |
| Filamente | 32 | 32 | 32 | 32 |
| Titer dtex | 225 | 212 | 195 | 185 |
| Zugfestigkeit in trockenem Zustand cN/tex | 5,2 | 4,9 | 5,3 | 4,6 |
| Bruchdehnung in trockenem Zustand % | 19 | 17,5 | 18 | 24 |
| E-Modul in trockenem Zustand cN/tex | 165 | 180 | 190 | 185 |

Anmerkung: Die Normen zur Bestimmung der bezeichneten Eigenschaften ergeben sich aus Tabelle 2.

**Tabelle 4 (Fasereigenschaften CAB-Schmelzfasern)**

| Laufende Nr. | CAB1 | CAB2 | CAB3 | CAB4 |
|---|---|---|---|---|
| Polymereinstellung | hart | hart | hart | weich |
| Spinngeschw. m/min | 250 | 500 | 1000 | 1000 |
| Filamente | 32 | 32 | 32 | 32 |
| Titer dtex | 195 | 210 | 205 | 210 |
| Zugfestigkeit in trockenem Zustand cN/tex | 5,9 | 6,3 | 6,6 | 5,3 |
| Bruchdehnung in trockenem Zustand % | 15,4 | 13,5 | 13,8 | 19 |
| E-Modul in trockenem Zustand cN/tex | 205 | 220 | 235 | 185 |

Anmerkung: Die Normen zur Bestimmung der bezeichneten Eigenschaften ergeben sich aus Tabelle 2.

Aufgrund der erreichten Fasereigenschaften wurde auf eine Fasernachbehandlung verzichtet. Die thermoplastischen Eigenschaften wurden durch das Schmelzspinnen nicht beeinträchtigt, so dass die Schmelzfasern als thermoplastische Komponente in den Verbundwerkstoffen eingesetzt werden konnten.

### Beispiel 2 (Herstellung des faserverstärkten Formkörpers)

Die Herstellung der Faserverbunde erfolgte in Form von Verbundplatten. Hierzu wurden Werkzeuge hergestellt, mit deren Hilfe variable Verbunddicken eingestellt werden konnten. Die Verbundherstellung erfolgte auf einer Heißpresse der Fa. Meyer, die speziell für den Einsatz der Verarbeitung thermoplastischer Materialien entwickelt wurde. Die Heizplatten der Presse wurden mit Kühlkanälen versehen, um eine schnelle Abkühlung des Werkstoffes zu ermöglichen. Die maximale Probengröße beträgt 900 cm². Weiterhin ermöglicht die Presse eine exakte Druck- und Temperatursteuerung der Heizplatten, wodurch reproduzierbare Herstellungsbedingungen gewährleistet wurden.

Als Verstärkungsfasern kam Viskosereifencord zum Einsatz. In Tabelle 5 sind die Eigenschaften der eingesetzten Verstärkungsfaser aufgeführt.

**Tabelle 5 (Eigenschaften der Verstärkungsfaser) (= Garn)**

| Verstärkungsfaser | Viskosefasern (Reifencord) |
|---|---|
| Einzelfilamenttiter dtex nach DIN 53812 | 1,3 |
| Titer dtex Gesamtgarntiter nach DIN 53812 | 1950 |
| Zugfestigkeit in trockenem Zustand) cN/tex nach DIN 53816 | 42,7 |
| Bruchdehnung in trockenem Zustand % nach DIN 53816 | 12,5 |
| E-Modul in trockenem Zustand cN/tex nach DIN 53816 | 1650 |

Die Herstellung von thermoplastischen Verbundstoffen ist im Wesentlichen unabhängig von der Art, wie die Fasern und die thermoplastische Matrix zusammengebracht werden. In der ersten Phase wird so weit aufgeheizt, dass die Matrix zum Schmelzen kommt. Die eigentliche Formgebung erfolgt beim darauf folgenden Abkühlen in einem Werkzeug. Die minimale Dauer des Vorganges hängt weitgehend von der Dicke der Verbundplatte ab. Der Prozess ist aber in jedem Fall wesentlich schneller als das Aushärten der üblichen duroplastischen Matrixwerkstoffe bei Raumtemperatur.

### Beispiel 3 (Vergleich)

Die Verbundstoffe wurden zunächst nach dem Laminatverfahren hergestellt, um die erreichbaren Eigenschaften charakterisieren zu können. Die Herstellung der Verbundwerkstoffe nach dem Laminatverfahren erfolgte in einem zweistufigen Pressverfahren. In der ersten Stufe wurde die granulatförmige Matrix in einer Teflonpressform zu drei Plättchen mit je 0,5 mm Dicke verpresst. Die drei Matrixplättchen wurden anschließend übereinandergeschichtet, wobei zwischen zwei Matrixplatten je eine Faserschicht mit unidirektional ausgerichteten Endlosfasern gelegt wurde. Hierbei wurde der Fasergehalt auf 20% eingestellt. In der zweiten Stufe wurden die so angeordneten drei Matrix- und zwei Faserschichten zu einer Verbundplatte der Dicke von 1,5 mm verpresst.

### Beispiel 4

Im Anschluss an die Verbundherstellung nach dem Laminatverfahren wurden erstmals cellulosische Verbundwerkstoffproben nach dem Coweaving- und Coknittingverfahren hergestellt. Beim Coweaving wurde die Verstärkungsfaser als Kette eingesetzt und die Matrixfasern als Schuss eingetragen. Die Herstellung erfolgte aus einem Handwebstuhl. Der Anteil der Verstärkungsfaser wurde analog zum Laminatverfahren auf ca. 20 Gew.-% eingestellt.

Für die Coknitting-Produkte wurden zunächst Mischgarne aus Verstärkungsfasern und Matrixfasern hergestellt, die dann auf einer konventionellen Stickmaschine zu Verbundgestricken verarbeitet wurden. Die Proben wurden unter Spannung konsolidiert wodurch eine perfekte Orientierung der Verstärkungsfaser bei der Konsolidierung erreicht werden konnte.

In der nachfolgenden Tabelle 6 sind die mechanischen Eigenschaften der unverstärkten Matrices zusammengefasst. Diese Werte werden zur Einschätzung des Verstärkungseffektes herangezogen. Die mechanischen Matrix- und Verbundeigenschaften wurden nach DIN EN ISO 527 1-3 bestimmt.

Die Herstellungsbedingungen wurden entsprechend den faserverstärkten Materialien gewählt. Wie die Ergebnisse zeigen, wird mit den ausgewählten Matrices eine großer Eigenschaftsbereich abgedeckt. Die Eigenschaften der hart und weich eingestellten Cellulosepropionate können direkt mit den entsprechenden Cellulosebutyraten verglichen werden. Bruchdehnungswerte für die weich eingestellten CP- und CAB-Matrices konnten nicht bestimmt werden; das Zugexperiment wurde bei 50% Dehnung abgebrochen.

**Tabelle 6 (Eigenschaften der unverstärkten Matrices)**

| Matrix | CA | CP (weich) | CP (hart) | CAB (weich) | CAB (hart) |
|---|---|---|---|---|---|
| Zugfestigkeit MPa nach DIN EN ISO 527 | 34,0 | 19,8 | 32,5 | 21,2 | 34 |
| E-Modul MPa nach DIN EN ISO 527 | 530 | 335 | 650 | 355 | 520 |
| Dehnung bei max. Zugfestigkeit % nach DIN EN ISO 527 | 15,9 | 7,2 | 6,2 | 8,9 | 6,2 |
| Bruchdehnung % nach DIN EN ISO 527 | 17 | - | 44 | - | 55 |

### Beispiel 5 (Verbundstoffe nach dem Laminatverfahren)

Die Auswirkungen der Faserverstärkung auf die Verbundeigenschaften der nach dem Laminatverfahren hergestellten Verbundstoffe sind in den Tabellen 7 bis 9 dargestellt. Der Faseranteil wurde hierbei mit 20 Gew.-% konstant gehalten. Aufgrund des Schichtaufbaus der Verbundstoffe ist der Faseranteil im Inneren des Verbundes größer als an den Oberflächen. Die Oberfläche selbst besteht aus reiner Matrix und kann folglich in weiteren Verarbeitungsschritten (Lackierung, etc.) wie ein konventioneller Celluloseester bearbeitet werden. Die Bruchdehnung wurde bei 20% Kraftverlust bestimmt.

**Tabelle 7 (CA-Matrix, verstärkt mit Viskosefaser (Reifencord) (CV))**

| Verbundsystem [Faser / Matrix] | CA | CV / CA |
|---|---|---|
| E-Modul MPa nach DIN EN ISO 527 | 910 | 5400 |
| Zugfestigkeit MPa nach DIN EN ISO 527 | 34 | 220 |
| Biegemodul MPa nach DIN EN ISO 527 | 1250 | 3340 |

**Tabelle 8 (CP-Matrix, verstärkt mit Viskosefaser (Reifencord) (CV))**

| Verbundsystem [Faser / Matrix] | CP (hart) | CV / CP (hart) | | |
|---|---|---|---|---|
| E-Modul MPa | 650 | 3210 | 335 | 1420 |
| Zugfestigkeit MPa | 32,4 | 125 | 19,8 | 86,4 |
| Biegemodul MPa | 1180 | 2250 | 850 | 1370 |

Anmerkung: Die Normen zur Bestimmung der bezeichneten Eigenschaften ergeben sich aus der Tabelle 7.

**Tabelle 9 (CAB-Matrix, verstärkt mit Viskosefaser (Reifencord) (CV))**

| Verbundsystem [Faser / Matrix] | CAB (hart) | CV / CAB (hart) | | |
|---|---|---|---|---|
| E-Modul MPa | 520 | 2960 | 355 | 1320 |
| Zugfestigkeit MPa | 34 | 114 | 21,2 | 64,3 |
| Biegemodul MPa | 1180 | 1960 | 630 | 890 |

Anmerkung: Die Normen zur Bestimmung der bezeichneten Eigenschaften ergeben sich aus der Tabelle 7.

Wie die Ergebnisse zeigen, wird durch Einsatz der Viskosefaser (Reifencord) eine hervorragende Verstärkungswirkung der thermoplastischen Celluloseestermatrices erzielt. Höchste Festigkeiten werden mit CA erreicht. Die von CP und von CAB in harter Einstellung liegen darunter auf vergleichbarem Niveau. Selbst bei den weich und flexibel eingestellten Matrices wird eine gute Verstärkungswirkung durch Einarbeiten von Viskosereifencord erreicht.

### Beispiel 5 (Verbundstoffe nach dem Coweavingverfahren)

Die Coweaving-Verbundstoffe wurden in Richtung Verstärkungsfaser (Kettrichtung) gemessen. Eingesetzt wurde als Matrix CA, CP (hart), CAB (hart). In Tabelle 10 sind die mechanischen Eigenschaften zusammengefasst.

**Tabelle 10 (Mechanische Eigenschaften der Coweaving-Verbundstoffe)**

| Verbundsystem [Faser / Matrix] | CV/CA | CV / CP (hart) | CV / CAB (hart) |
|---|---|---|---|
| E-Modul MPa nach DIN EN ISO 527 | 6320 | 3680 | 3420 |
| Zugfestigkeit MPa nach DIN EN ISO 527 | 244 | 114 | 118 |
| Biegemodul MPa nach DIN EN ISO 527 | 3540 | 2310 | 2140 |

Anmerkung: Die Normen zur Bestimmung der bezeichneten Eigenschaften ergeben sich aus der Tabelle 7.

Auch aus den Coweaving-Produkten können in einfacher Weise Verbundplatten konsolidiert werden. Die Schmelzfasern schmelzen vollständig auf und bilden eine geschlossene Matrix mit orientierten Verstärkungsfasern. Die Festigkeitswerte liegen im Bereich der nach dem Laminatverfahren hergestellten Produkte. Allerdings können die Proben nur bedingt verglichen werden, da bei den Coweaving-Produkten höhere Faseranteile in Prüfrichtung vorhanden sind, jedoch mit geringerer Faserorientierung.

### Beispiel 6 (Verbundstoffe nach dem Coknittingverfahren)

Die mechanischen Eigenschaften der Verbundstoffe, die nach dem Coknittingverfahren hergestellt wurden, liegen unterhalb der Werte nach Herstellung über das Coweavingverfahren. Dies ist auf Lufteinschlüsse (offenere Struktur) und verfahrensbedingt geringere Verstärkungsfaserorientierung zurückzuführen. In Tabelle 11 sind mechanische Eigenschaften für CV/CA aufgeführt:

**Tabelle 11 (Mechanische Eigenschaften ausgewählter Coknitting-Verbundstoffe)**

| Verbundsystem [Faser / Matrix] | CV/CA |
|---|---|
| E-Modul MPa | 4320 |
| Zugfestigkeit MPa | 162 |
| Biegemodul MPa | 1840 |
| Bruchdehnung % | 9,2 |

Anmerkung: Die Normen zur Bestimmung der bezeichneten Eigenschaften ergeben sich aus der Tabelle 10. Sämtliche in dieser Anmeldung herangezogenen Normen stellen auf deren Prioritätszeitpunkt (23.03.2015) ab bzw. sind an diesem gültig.

### Folgerungen aus den beschriebenen Versuchen:

Um akzeptable Presstaktzeiten zu realisieren, ist eine möglichst innige Vermischung der Verstärkungsfasern mit dem Matrixmaterial Vorbedingung. Es hat sich erwiesen, dass dies über eine vorherige Verspinnung der Matrixpolymere zu Fasern (aus der Schmelze) und durch Mischen mit den Verstärkungsfasern auf Faserebene erreicht werden kann. Durch dieses Vorgehen, das eine wesentliche Vereinfachung der Verbundherstellung darstellt, konnte erstmals die Anwendung neuer Verbundtechnologien (z.B. Comingling, Coweaving) mit thermoplastischen Celluloseestermatrices erreicht werden.

Eingesetzt wurden Materialien deren Ausgangskomponenten auf nachwachsenden Rohstoffen bzw. modifizierter Cellulose basieren. Als Verstärkungsfasern wurde Viskosereifencord und als Matrixpolymere thermoplastische Celluloseester-Formassen des Typs Celluloseacetat CA, Cellulosepropionat CP, und Celluloseacetobutyrat CAB verwendet.

Die Matrixpolymere konnten problemlos zu Fasern verarbeitet und damit erstmals als Schmelzfasern eingesetzt werden. Die Verbundherstellung erfolgte zunächst in Form von Pressplatten. Durch den Einsatz von Schmelzfasern ist es gelungen die Herstellung dieser neuen Faserverbundsysteme auf Basis von Cellulosematerialien wesentlich zu vereinfachen Die Verbundwerkstoffe, die nach dem Coknitting und Coweaving-Verfahren hergestellt wurden, zeigen nach eingehender Optimierung der Verfahrensparameter gute bis sehr gute mechanische Eigenschaften. Die neuen Verbundwerkstoffe können mit Vorteil im Automobilbau, beispielsweise als Innenverkleidungen, eingesetzt werden, da die Leichtbauweise mit flexibel anwendbaren Verbundwerkstoffsystemen in Zukunft zunehmend an Bedeutung gewinnen wird.

Nachfolgend werden bevorzugte Ausführungsformen der Erfindung vorgestellt:
**1.** Verfahren zur Herstellung faserverstärkter Formkörper mit einer organischen Matrix auf Basis thermoplastischer Celluloseester, wobei Verstärkungsfasern in Form von Endlosfasern mit Schmelzfasern in Form von Endlosfasern auf Basis thermoplastischer Celluloseester in ein textiles Flächengebilde überführt werden, wobei der thermoplastische Celluloseester der Schmelzfasern einen Schmelzflussindex MFI nach DIN ISO 1133 von 1,0 bis 50 g/min bei 245°C und die Schmelzfasern einen Einzelfilamenttiter nach DIN 53812 von 0,3 bis 40,0 dtex, eine Zugfestigkeit in trockenem Zustand nach DIN 53816 von 2 bis 40 cN/tex sowie eine Bruchdehnung in trockenem Zustand nach DIN 53816 von 2 bis 40% aufweisen, und das erhaltene textile Flächengebilde zum Aufschmelzen der Schmelzfasern unter Bildung eines faserverstärkten Formkörpers erhitzt wird.
**2.** Verfahren nach Ausführungsform 1, wobei als Verstärkungsfasern Chemiefasern und/oder Naturfasern eingesetzt werden.
**3.** Verfahren nach Ausführungsform 2, wobei die Naturfasern Samenfasern, insbesondere von Baumwolle, Bastfasern, insbesondere von Flachs, Hanf, Jute, Kinap, Ramie, Abaca, Rosenna und/oder Urena, Hartfasern, insbesondere von Alpha- oder Espatogras, Fique, Henequen, Kokos, Manila, Porphium und/oder Glisal, Tierfasern, insbesondere von Wolle bzw. feine und grobe Tierhaare, Holzfasern, Blattfasern und/oder Seide darstellen.
**4.** Verfahren nach Ausführungsform 2, wobei die Chemiefasern, insbesondere auf Basis abgewandelter Naturstoffe pflanzlicher Herkunft, insbesondere Kupferseidefasern, Viskosefasern, Modalfasern, Kunstseide- und Celluloseacetatfasern, insbesondere als Acetat oder Triacetat, Alginatfasern, Polyisoprenfasern oder Synthesefasern, insbesondere Elastofasern, Fluorofasern, Polyacrylfasern, insbesondere auf Basis von Polyacrylonitril oder Modacryl, Polyamidfasern, insbesondere Nylon- oder Aramidfasern, Polychloridfasern, insbesondere auf Basis von Polyvinylchlorid und Polyvinylidenchlorid, Polyesterfasern, Polyolefinfasern, insbesondere auf Basis von Polyethylen und Polypropylen, oder Polyvinylalkoholfasern darstellen.
**5.** Verfahren nach Ausführungsform 4, wobei anorganische Chemiefasern auf Basis von Glasfasern, Carbonfasern oder Metallfasern eingesetzt werden.
**6.** Verfahren nach einem der Ausführungsformen 1 bis 5, wobei Schmelzfasern herangezogen werden, bei denen der thermoplastische Celluloseester in Form von Celluloseacetat CA, Celluloseproprionat CP, Cellulosebutyrat CB, Celluloseacetopropionat CAP und/oder Celluloseacetobutyrat CAB vorliegt.
**7.** Verfahren nach mindestens einem der vorhergehenden Ausführungsformen, wobei die thermoplastischen Celluloseester durch Einbezug eines Weichmachers auf die definierten Eigenschaften eingestellt werden, insbesondere durch Einbezug in einer Menge von 1 bis 20 Gew.-%, insbesondere in Form schwerflüchtiger Ester, insbesondere in Form von Dioctylphthalat, C₁₀-C₂₁ Hexansulfonsäurephenylester (Hexamoll), 1,2-Cyclohexandicarbonsäurediisononylester (Mesamoll), von fetten Ölen, Weichharzen oder Campher.
**8.** Verfahren nach mindestens einem der vorhergehenden Ausführungsformen, wobei der thermoplastische Celluloseester eine Härte H30 nach DIN 53505 von 5 bis 300, insbesondere von 10 bis 150, und/oder eine Nullviskosität η Pas nach DIN 54811 von 5 bis 1000, insbesondere von 20 bis 200, aufweist.
**9.** Verfahren nach mindestens einem der vorhergehenden Ausführungsformen, wobei
   die Schmelzfasern einen Einzelfilamenttiter nach DIN 53812 von 0,5 bis 30 dtex, eine Zugfestigkeit in trockenem Zustand nach DIN 53816 von 3 bis 30 cN/tex sowie eine Bruchdehnung in trockenem Zustand nach DIN 53816 von 3 bis 35 aufweisen.
**10.** Verfahren nach mindestens einem der vorhergehenden Ausführungsformen, wobei die Verstärkungsfasern aufweisen: einen Einzelfilamenttiter nach DIN 53812 von 0,2 bis 6 dtex, insbesondere von 0,5 bis 4 dtex, eine Zugfestigkeit in trockenem Zustand nach DIN 53816 von 40 bis 500 cN/tex, insbesondere von 70 bis 300 cN/tex, und/oder eine Bruchdehnung in trockenem Zustand nach DIN 53816 von 1 bis 20%, insbesondere von 1,5 bis 14%.
**11.** Verfahren nach mindestens einem der vorhergehenden Ausführungsformen, wobei die Verstärkungsfasern und die Schmelzfasern in Form von Garnen eingesetzt werden.
**12.** Verfahren nach mindestens einem der vorhergehenden Ausführungsformen, wobei ein textiles Flächengebilde in Form von Geweben, Gewirken, Strickwaren, Geflechten oder Gelegen aus den Verstärkungs- und den Schmelzfasern hergestellt wird.
**13.** Verfahren nach Ausführungsform 12, wobei die Gewebe durch gemeinsames Verweben der Verstärkungsfasern und der Schmelzfasern hergestellt werden, insbesondere mit den Verstärkungsfasern als Schuss und den Schmelzfasern als Kette (Coweaving).
**14.** Verfahren nach mindestens einem der vorhergehenden Ausführungsformen, wobei zur Herstellung der textilen Flächengebilde Mischgarne aus Schmelzfasern und Verstärkungsfasern als Garn eingesetzt werden.
**15.** Verfahren nach mindestens einem der vorhergehenden Ausführungsformen, wobei die Verstärkungsfasern und die Schmelzfasern in einem derartigen Mengenverhältnis eingesetzt werden, dass der Anteil der Verstärkungsfasern in dem faserverstärkten Formkörper zwischen 5 und 75 Gew.-%, insbesondere zwischen 10 und 50 Gew.-% liegt.
**16.** Verfahren nach mindestens einem der vorhergehenden Ausführungsformen, wobei das Aufschmelzen der Schmelzfasern im textilen Flächengebilde bei einer Temperatur von 80°C bis 300°C, insbesondere von 120°C bis 260°C durchgeführt wird.
**17.** Verfahren nach mindestens einem der vorhergehenden Ausführungsformen, wobei das Aufschmelzen der Schmelzfasern im textilen Flächengebilde unter einem Druck von 0,1 bis 1000 bar, insbesondere von 2 bis 100 bar, durchgeführt wird.
**18.** Verfahren nach mindestens einem der vorhergehenden Ausführungsformen, wobei das Aufschmelzen der Schmelzfasern im textilen Flächengebilde während einer Zeitdauer von 5 s bis 20 min, insbesondere von 30 s bis 5 min, durchgeführt wird.
**19.** Verfahren nach mindestens einem der vorhergehenden Ausführungsformen, wobei ein flächenförmiger faserverstärkter Formkörper hergestellt wird.
**20.** Verfahren nach Ausführungsform 19, wobei mehrere flächenförmige Formkörper zu einem Verbundkörper miteinander verpresst werden.
**21.** Faserverstärkter Formkörper mit einer organischen Matrix auf Basis thermoplastischer Celluloseester und darin integrierten Verstärkungsfasern in Form von Endlosgarnen, insbesondere erhältlich nach einem Verfahren nach mindestens einem der vorhergehenden Ausführungsformen, wobei die organische Matrix auf einem thermoplastischen Celluloseester beruht, wobei
   1.) der thermoplastische Celluloseester einen Schmelzflussindex MFI nach DIN ISO 1133 von 1,0 bis 50 g/min bei 245°C, und
   2.) der faserverstärkte Formkörper
      ein Biegemodul nach DIN EN ISO 527 von 1.500 bis 20.000 MPa, insbesondere von 4.000 bis 15.000 MPa,
      eine Zugfestigkeit nach DIN EN ISO 527 von 150 bis 600 MPa, insbesondere von 200 bis 400 MPa, und/oder
      ein E-Modul nach DIN EN ISO 527 von 1.000 bis 15.000 MPa, insbesondere von 2.000 bis 12.000 MPa,
      aufweist.
**22.** Faserverstärkter Formkörper nach Ausführungsform 21, wobei dass der faserverstärkte Formkörper eine Kerbschlagzähigkeit nach DIN EN ISO 179-1 von 100 bis 600, insbesondere 200 bis 400 kJ/m², aufweist.
**23.** Faserverstärkter Formkörper nach Ausführungsform 21 oder 22, wobei er flächenförmig ist.
**24.** Verwendung des faserverstärkten Formkörpers nach einem der Ausführungsformen 21 bis 23 zur Ausbildung der gewünschten Form durch thermische und mechanische Behandlung, insbesondere durch Pressen, Biegen und Tiefziehen.
**25.** Verwendung des faserverstärkten Formkörpers nach einem der Ausführungsformen 21 bis 23 als Konstruktionsteil im Fahrzeugbau, insbesondere im Automobilbau, und im Flugzeugbau, als Promenade, als Lärmschutz, als Geländer, als Fenster und Türen, auch als Fenster- und Türprofil, als Fensterrahmen, als Zaunsystem, als Verpackungsmaterial, als Dämmmaterial und als Möbelteil.
**26.** Verwendung nach Ausführungsform 25, wobei der Formkörper als Automobilinnenteil, insbesondere als Dachteil, Seitenverkleidung, Türverkleidung, Kofferraumauskleidung, Reserveradmulde, Säulenverkleidung, als Armaturenbrett, für den Automobil-Außenbereich, als Unterbodenschutz, verwendet wird.
**27.** Verwendung des faserverstärkten Formkörpers nach einem der Ausführungsformen 21 bis 23 zur Herstellung eines carbonisierten Formkörpers, insbesondere durch Carbonisierung zwischen 400 und 3000°C, insbesondere zwischen 700 und 2400°C.

## Patentansprüche

1. Verfahren zur Herstellung faserverstärkter Formkörper mit einer organischen Matrix auf Basis thermoplastischer Celluloseester, **dadurch gekennzeichnet, dass** Verstärkungsfasern in Form von Endlosfasern mit Schmelzfasern in Form von Endlosfasern auf Basis thermoplastischer Celluloseester in ein textiles Flächengebilde überführt werden, wobei der thermoplastische Celluloseester der Schmelzfasern einen Schmelzflussindex MFI nach DIN ISO 1133 von 1,0 bis 50 g/min bei 245°C und die Schmelzfasern einen Einzelfilamenttiter nach DIN 53812 von 0,3 bis 40,0 dtex, eine Zugfestigkeit im trockenen Zustand nach DIN 53816 von 2 bis 40 cN/tex sowie eine Bruchdehnung im trockenen Zustand nach DIN 53816 von 2 bis 40% aufweisen, und das erhaltene textile Flächengebilde zum Aufschmelzen der Schmelzfasern unter Bildung eines faserverstärkten Formkörpers erhitzt wird.

2. Verfahren nach Anspruch 1, **dadurch gekennzeichnet, dass** als Verstärkungsfasern Chemiefasern, insbesondere auf Basis abgewandelter Naturstoffe pflanzlicher Herkunft, insbesondere Kupferseidefasern, Viskosefasern, Modalfasern, Kunstseide- und Celluloseacetatfasern, insbesondere als Acetat oder Triacetat, Alginatfasern, Polyisoprenfasern oder Synthesefasern, insbesondere Elastofasern, Fluorofasern, Polyacrylfasern, insbesondere auf Basis von Polyacrylonitril oder Modacryl, Polyamidfasern, insbesondere Nylon- oder Aramidfasern, Polychloridfasern, insbesondere auf Basis von Polyvinylchlorid und Polyvinylidenchlorid, Polyesterfasern, Polyolefinfasern, insbesondere auf Basis von Polyethylen und Polypropylen, oder Polyvinylalkoholfasern darstellen, und/oder Naturfasern, insbesondere in Form von Samenfasern, insbesondere von Baumwolle, Bastfasern, insbesondere von Flachs, Hanf, Jute, Kinap, Ramie, Abaca, Rosenna und/oder Urena, Hartfasern, insbesondere von Alpha- oder Espatogras, Fique, Henequen, Kokos, Manila, Porphium und/oder Glisal, Tierfasern, insbesondere von Wolle bzw. feine und grobe Tierhaare, Holzfasern, Blattfasern und/oder Seide darstellen, eingesetzt werden.

3. Verfahren nach Anspruch 2, **dadurch gekennzeichnet, dass** anorganische Chemiefasern auf Basis von Glasfasern, Carbonfasern oder Metallfasern eingesetzt werden.

4. Verfahren nach einem der Ansprüche 1 bis 3, **dadurch gekennzeichnet, dass** Schmelzfasern herangezogen werden, bei denen der thermoplastische Celluloseester in Form von Celluloseacetat CA, Celluloseproprionat CP, Cellulosebutyrat CB, Celluloseacetopropionat CAP und/oder Celluloseacetobutyrat CAB vorliegt.

5. Verfahren nach mindestens einem der vorhergehenden Ansprüche, **dadurch gekennzeichnet, dass** die Verstärkungsfasern und die Schmelzfasern in Form von Garnen eingesetzt werden.

6. Verfahren nach mindestens einem der vorhergehenden Ansprüche, **dadurch gekennzeichnet, dass** ein textiles Flächengebilde in Form von Geweben, Gewirken, Strickwaren, Geflechten oder Gelegen aus den Verstärkungs- und den Schmelzfasern hergestellt wird.

7. Verfahren nach Anspruch 6, **dadurch gekennzeichnet, dass** die Gewebe durch gemeinsames Verweben der Verstärkungsfasern und der Schmelzfasern hergestellt werden, insbesondere mit einer in einem Coweaving Verfahren hergestellten Gewebe mit den Verstärkungsfasern als Schuss und den Schmelzfasern als Kette.

8. Verfahren nach mindestens einem der vorhergehenden Ansprüche, **dadurch gekennzeichnet, dass** zur Herstellung der textilen Flächengebilde Mischgarne aus Schmelzfasern und Verstärkungsfasern als Garn eingesetzt werden.

9. Verfahren nach mindestens einem der vorhergehenden Ansprüche, **dadurch gekennzeichnet, dass** die Verstärkungsfasern und die Schmelzfasern in einem derartigen Mengenverhältnis eingesetzt werden, dass der Anteil der Verstärkungsfasern in dem faserverstärkten Formkörper zwischen 5 und 75 Gew.-%, insbesondere zwischen 10 und 50 Gew.-% liegt.

10. Verfahren nach mindestens einem der vorhergehenden Ansprüche, **dadurch gekennzeichnet, dass** das Aufschmelzen der Schmelzfasern im textilen Flächengebilde unter einem Druck von 0,1 bis 1000 bar, insbesondere von 2 bis 100 bar, durchgeführt wird.

11. Verfahren nach mindestens einem der vorhergehenden Ansprüche, **dadurch gekennzeichnet, dass** ein flächenförmiger faserverstärkter Formkörper hergestellt wird, wobei insbesondere mehrere flächenförmige Formkörper zu einem Verbundkörper miteinander verpresst werden.

12. Faserverstärkter, insbesondere flächenförmiger Formkörper mit einer organischen Matrix auf Basis thermoplastischer Celluloseester und darin integrierten Verstärkungsfasern, **dadurch gekennzeichnet, dass** die Verstärkungsfasern Endlosgarnen sind, und der Formkörper insbesondere erhältlich ist nach einem Verfahren nach mindestens einem der vorhergehenden Ansprüche, wobei die organische Matrix auf einem thermoplastischen Celluloseester beruht, und wobei
1.) der thermoplastische Celluloseester einen Schmelzflussindex MFI nach DIN ISO 1133 von 1,0 bis 50 g/min bei 245°C, und
2.) der faserverstärkte Formkörper
ein Biegemodul nach DIN EN ISO 527 von 1.500 bis 20.000 MPa, insbesondere von 4.000 bis 15.000 MPa,
eine Zugfestigkeit nach DIN EN ISO 527 von 150 bis 600 MPa, insbesondere von 200 bis 400 MPa, und/oder
ein E-Modul nach DIN EN ISO 527 von 1.000 bis 15.000 MPa, insbesondere von 2.000 bis 12.000 MPa,
aufweist.

13. Faserverstärkter Formkörper nach Anspruch 12, **dadurch gekennzeichnet, dass** der faserverstärkte Formkörper eine Kerbschlagzähigkeit nach DIN EN ISO 179-1 von 100 bis 600, insbesondere 200 bis 400 kJ/m², aufweist.

14. Verwendung des faserverstärkten Formkörpers nach Anspruch 12 oder 13 zur Ausbildung der gewünschten Form durch thermische und mechanische Behandlung, insbesondere durch Pressen, Biegen und Tiefziehen.

15. Verwendung des faserverstärkten Formkörpers nach Anspruch 12 oder 13 als Konstruktionsteil im Fahrzeugbau, insbesondere im Automobilbau, und im Flugzeugbau, als Promenade, als Lärmschutz, als Geländer, als Fenster und Türen, auch als Fenster- und Türprofil, als Fensterrahmen, als Zaunsystem, als Verpackungsmaterial, als Dämmmaterial und als Möbelteil, vorzugsweise als Automobilinnenteil, insbesondere als Dachteil, Seitenverkleidung, Türverkleidung, Kofferraumauskleidung, Reserveradmulde, Säulenverkleidung, als Armaturenbrett, für den Automobil-Außenbereich, als Unterbodenschutz, verwendet wird.

16. Verwendung des faserverstärkten Formkörpers nach Anspruch 12 oder 13 zur Herstellung eines carbonisierten Formkörpers, insbesondere durch Carbonisierung zwischen 400 und 3000°C, insbesondere zwischen 700 und 2400°C.

## Claims

1. A method for producing fibre-reinforced shaped bodies with an organic matrix on the basis of thermoplastic cellulose esters, **characterised in that** reinforcing fibres in the form of filaments with fusible fibres in the form of filaments on the basis of thermoplastic cellulose esters are converted into a textile fabric, wherein the thermoplastic cellulose ester of the fusible fibres has a melt flow index MFI according to DIN ISO 1133 of 1.0 to 50 g/min at 245°C and the fusible fibres have an individual-filament titre according to DIN 53812 of 0.3 to 40.0 dtex, a tensile strength in the dry state according to DIN 53816 of 2 to 40 cN/tex and an elongation at break in the dry state according to DIN 53816 of 2 to 40%, and the resulting textile fabric is heated to melt the fusible fibres, forming a fibre-reinforced shaped body.

2. A method according to Claim 1, **characterised in that** chemical fibres, especially on the basis of modified naturally-occurring substances of plant origin, especially cuprammonium rayon fibres, viscose fibres, modal fibres, artificial silk and cellulose acetate fibres, especially as acetate or triacetate, alginate fibres, polyisoprene fibres or synthetic fibres, especially elastofibres, fluorofibres, polyacrylic fibres, especially based on polyacrylonitrile or modacrylic, polyamide fibres, especially nylon or aramid fibres, polychloride fibres, especially based on polyvinyl chloride and polyvinylidene chloride, polyester fibres, polyolefin fibres, especially based on polyethylene and polypropylene, or polyvinyl alcohol fibres, and/or natural fibres, especially in the form of seed fibres, especially of cotton, bast fibres, especially of flax, hemp, jute, kinap , ramie, abaca, rosenna and/or urena, hard fibres, especially of alfa grass or esparto grass, fique, henequen, coir, manila, porphium and/or glisal, animal fibres, especially of wool or fine and coarse animal hairs, wood fibres, leaf fibres and/or silk, are used as reinforcing fibres.

3. A method according to Claim 2, **characterised in that** inorganic chemical fibres based on glass fibres, carbon fibres or metal fibres are used.

4. A method according to one of Claims 1 to 3, **characterised in that** fusible fibres are used in which the thermoplastic cellulose ester is present in the form of cellulose acetate CA, cellulose propionate CP, cellulose butyrate CB, cellulose acetate propionate CAP and/or cellulose acetate butyrate CAB.

5. A method according to at least one of the preceding claims, **characterised in that** the reinforcing fibres and the fusible fibres are used in the form of yarns.

6. A method according to at least one of the preceding claims, **characterised in that** a textile fabric in the form of woven fabrics, knitted fabrics, knitted goods, meshes or laid fabrics made of the reinforcing fibres and the fusible fibres is produced.

7. A method according to Claim 6, **characterised in that** the woven fabrics are produced by joint weaving of the reinforcing fibres and the fusible fibres, especially with a woven fabric produced in a coweaving process with the reinforcing fibres as weft and the fusible fibres as warp.

8. A method according to at least one of the preceding claims, **characterised in that** mixed yarns comprising fusible fibres and reinforcing fibres are used as yarn for producing the textile fabric.

9. A method according to at least one of the preceding claims, **characterised in that** the reinforcing fibres and the fusible fibres are used in such a proportion that the content of the reinforcing fibres in the fibre-reinforced shaped body is between 5 and 75 wt.%, especially between 10 and 50 wt.%.

10. A method according to at least one of the preceding claims, **characterised in that** the melting of the fusible fibres in the textile fabric is carried out at a pressure of 0.1 to 1000 bar, especially of 2 to 100 bar.

11. A method according to at least one of the preceding claims, **characterised in that**
a two-dimensional fibre-reinforced shaped body is produced, with especially a plurality of two-dimensional shaped bodies being pressed together to form a composite body.

12. A fibre-reinforced, especially two-dimensional, shaped body with an organic matrix on the basis of thermoplastic cellulose esters and reinforcing fibres integrated therein, **characterised in that** the reinforcing fibres are endless yarns, and the shaped body is obtainable especially using a method according to at least one of the preceding claims, wherein the organic matrix is based on a thermoplastic cellulose ester, and wherein
1.) the thermoplastic cellulose ester has a melt flow index MFI according to DIN ISO 1133 of 1.0 to 50 g/min at 245°C, and
2.) the fibre-reinforced shaped body has
a flexural modulus according to DIN EN ISO 527 of 1,500 to 20,000 MPa, especially of 4,000 to 15,000 MPa,
a tensile strength according to DIN EN ISO 527 of 150 to 600 MPa, especially of 200 to 400 MPa, and/or
a modulus of elasticity according to DIN EN ISO 527 of 1,000 to 15,000 MPa, especially of 2,000 to 12,000 MPa.

13. A fibre-reinforced shaped body according to Claim 12, **characterised in that** the fibre-reinforced shaped body has a notched impact strength according to DIN EN ISO 179-1 of 100 to 600, especially 200 to 400, kJ/m².

14. Use of the fibre-reinforced shaped body according to Claim 12 or Claim 13 to form the desired form by thermal and mechanical treatment, especially by pressing, bending and thermoforming.

15. Use of the fibre-reinforced shaped body according to Claim 12 or Claim 13 as a structural part in vehicle manufacturing, especially in automobile manufacturing, and in aircraft manufacturing, as a promenade, as noise protection, as balustrades, as windows and doors, also as window and door profiles, as window frames, as a fencing system, as packaging material, as insulating material and as a furniture part, preferably as an interior automobile part, especially as a roof part, side lining, door trim, boot-space lining, spare-wheel well, pillar trim, as a dashboard, for the exterior automobile field, as an underbody protector.

16. Use of the fibre-reinforced shaped body according to Claim 12 or Claim 13 for producing a carbonised shaped body, especially by carbonisation between 400 and 3000°C, especially between 700 and 2400°C.

## Revendications

1. Procédé pour produire des corps moulés renforcés par des fibres comportant une matrice organique à base d'ester cellulosique thermoplastique, **caractérisé en ce que** des fibres de renforcement prenant la forme de fibres sans fin avec des fibres fusibles sous la forme de fibres sans fin à base d'ester cellulosique thermoplastique sont transformées en une structure textile plate, dans lequel l'ester cellulosique thermoplastique des fibres fusibles présente un indice de fluidité à chaud MFI d'après la norme DIN ISO 1133 de 1,0 à 50 g/min à 245°C et les fibres fusibles présentent un titre de filament individuel d'après la norme DIN 53812 de 0,3 à 40,0 dtex, une résistance à la traction à l'état sec d'après la norme DIN 53816 de 2 à 40 cN/tex, ainsi qu'un allongement à la rupture à l'état sec d'après la norme DIN 53816 de 2 à 40 %, et la structure textile plate obtenue est chauffée pour faire fondre les fibres fusibles en formant un corps moulé renforcé par des fibres.

2. Procédé selon la revendication 1, **caractérisé en ce que**, à titre de fibres de renforcement, des fibres chimiques, en particulier à base de substances naturelles dérivées d'origine végétale, en particulier des fibres de soie cuivrées, des fibres de viscose, des fibres de modal, des fibres de soie artificielle et d'acétate de cellulose, en particulier sous forme d'acétate ou de triacétate, des fibres d'alginate, des fibres de polyisoprène ou des fibres synthétiques, notamment des élastofibres, des fluorofibres, des fibres polyacryliques, en particulier à base de polyacrylonitrile ou de modacryle, des fibres de polyamide, en particulier des fibres de Nnylon ou d'aramide, des fibres de polychlorure, en particulier à base de chlorure de polyvinyle et de chlorure de polyvinylidène, des fibres de polyester, des fibres de polyoléfine, en particulier à base de polyéthylène et de polypropylène, ou des fibres d'alcool polyvinylique, et/ou des fibres naturelles, en particulier sous la forme de fibres provenant de graines, en particulier de coton, de fibres de raphia, en particulier de lin, chanvre, jute, kinap, rami, abaca, rosenna et/ou urena, de fibres dures, en particulier d'alfa-alfa ou de spartes, de fique, de henequen, de coco, de manille, de porphium et/ou de glisal, de fibres animales, en particulier de laine et/ou de poils d'animaux fins et grossiers, de fibres de bois, de fibres de feuilles et/ou de soie, sont mises en oeuvre.

3. Procédé selon la revendication 2, **caractérisé en ce que** des fibres chimiques inorganiques à base de fibres de verre, de fibres de carbone ou de fibres métalliques sont mises en oeuvre.

4. Procédé selon l'une des revendications 1 à 3, **caractérisé en ce que** sont utilisées les fibres fusibles dans lesquelles l'ester cellulosique thermoplastique se présente sous la forme d'acétate de cellulose CA, de propionate de cellulose CP, de butyrate de cellulose CB, d'acétopropionate de cellulose CAP et/ou d'acétobutyrate de cellulose CAB.

5. Procédé selon au moins l'une des revendications précédentes, **caractérisé en ce que** les fibres de renforcement et les fibres fusibles sont mises en oeuvre sous la forme de fils.

6. Procédé selon au moins l'une des revendications précédentes, **caractérisé en ce qu'**une structure textile plate est produite sous la forme de tissus, d'aiguilletés, de tricots, de tresses ou de nattes à partir de fibres de renforcement et de fibres fusibles.

7. Procédé selon la revendication 6, **caractérisé en ce que** les tissus sont produits par tissage conjoint des fibres de renforcement et des fibres fusibles, en particulier avec un tissu produit par un procédé de cotissage (coweaving) avec des fibres de renforcement comme trame et des fibres fusibles comme chaîne.

8. Procédé selon au moins l'une des revendications précédentes, caractérisé en ce des fils mixtes à partir de fibres fusibles et de fibres de renforcement comme fil pour la production des structures textiles plates sont mis en oeuvre.

9. Procédé selon au moins l'une des revendications précédentes, **caractérisé en ce que** les fibres de renforcement et les fibres fusibles sont mises en oeuvre dans un rapport quantitatif tel que la proportion de fibres de renforcement dans le corps moulé renforcé par des fibres est comprise entre 5 et 75 % en poids, en particulier entre 10 et 50 % en poids.

10. Procédé selon au moins l'une des revendications précédentes, **caractérisé en ce que** la fusion des fibres fusibles dans la structure textile plate est conduite sous une pression de 0,1 à 1000 bar, en particulier de 2 à 100 bar.

11. Procédé selon au moins l'une des revendications précédentes, **caractérisé en ce qu'**un corps moulé renforcé par des fibres de forme plate est produit, où plusieurs corps moulés de forme plate sont en particulier compressés les uns avec les autres pour donner un corps composite.

12. Corps moulés renforcés par des fibres, en particulier de forme plate, comportant une matrice organique à base d'ester cellulosique thermoplastique et des fibres de renforcement qui y sont intégrées, **caractérisés en ce que** les fibres de renforcement sont des fils sans fin et le corps moulé peut être notamment obtenu d'après un procédé selon au moins l'une des revendications précédentes, la matrice organique étant à base d'un ester cellulosique thermoplastique, et
1.) l'ester cellulosique thermoplastique présentant un indice de fluidité à chaud MFI selon la norme DIN ISO 1133 de 1,0 à 50 g/min à 245°C, et
2.) le corps moulé renforcé par des fibres présentant
un module de flexion selon la norme DIN EN ISO 527 de 1500 à 20 000 MPa, en particulier de 4000 à 15 000 MPa,
une résistance à la traction selon la norme DIN EN ISO 527 de 150 à 600 MPa, en particulier de 200 à 400 MPa, et/ou
un module E selon la norme DIN EN ISO 527 de 1000 à 15 000 MPa, en particulier de 2000 à 12 000 MPa.

13. Corps moulé renforcé par des fibres selon la revendication 12, le corps moulé renforcé par des fibres étant **caractérisé en ce qu'**il présente une résistance aux chocs sur éprouvette entaillée selon la norme DIN EN ISO 179-1 de 100 à 600, en particulier de 200 à 400 kJ/m².

14. Utilisation du corps moulé renforcé par des fibres selon la revendication 12 ou 13 pour la constitution de la forme voulue par traitement thermique et mécanique, en particulier par pression, flexion et emboutissage.

15. Utilisation du corps moulé renforcé par des fibres selon la revendication 12 ou 13 comme pièce de construction dans la construction de véhicules, en particulier dans la construction automobile, et dans la construction aéronautique, sous forme d'allée, de protection acoustique, de balustrade, de fenêtres et de portes, également sous forme de profilés de fenêtres et de portes, de cadres de fenêtres, de système de clôture, sous forme de matériau d'emballage, sous forme de matériau d'isolation et sous forme de partie de meubles, de préférence sous forme de pièces intérieures automobiles, en particulier sous forme de partie de toit, d'habillage latéral, d'habillage de porte, d'habillage intérieur de coffre, de logements de roue de secours, d'habillage de montants, sous forme de tableau de bord, pour l'espace extérieur de l'automobile, sous forme de protection du sous-sol.

16. Utilisation du corps moulé renforcé par des fibres selon la revendication 12 ou 13 pour produire un corps moulé carbonisé, en particulier par carbonisation entre 400 et 3000°C, en particulier entre 700 et 2400°C.
